Europäisches Patentamt

(19) European Patent Office (11) Publication number: **0 062 244**

Office européen des brevets **B1**

(12) **EUROPEAN PATENT SPECIFICATION**

(45) Date of publication of patent specification: **06.09.89** (51) Int. Cl.⁴: **G 05 B 19/42, G 05 B 19/403**

(21) Application number: **82102483.3**

(22) Date of filing: **25.03.82**

(54) **Robot locus control system.**

(30) Priority: **26.03.81 JP 44275/81**

(43) Date of publication of application:
**13.10.82 Bulletin 82/41**

(45) Publication of the grant of the patent:
**06.09.89 Bulletin 89/36**

(84) Designated Contracting States:
**CH DE FR GB LI SE**

(56) References cited:
**FR-A-2 321 373**
**US-A-3 839 800**
**US-A-4 118 620**

**AUTOMATIC WELDING, vol.33, no 7, July 1980.CAMBRIDGE (GB) V.T.ANTONNENKO et al.: "A spotwelding robot with correction of the programme on the basis of the work pieces",pages 26-29.**

**The file contains technical information submitted after the application was filed and not included in this specification**

(73) Proprietor: **KABUSHIKI KAISHA YASKAWA DENKI SEISAKUSHO**
**2346, Oaza-Fujita Yahatanishi-Ku**
**Kitakyushu-Shi Fukuoka-Ken (JP)**

(72) Inventor: **Nio, Satoru**
**12-6-501, Kosagida-Machi Yahatanishi-Ku**
**Kitakyushu-Shi Fukuoka-Ken (JP)**
Inventor: **Sato, Shinobu**
**1-4-1, Tenraiji Tobata-Ku**
**Kitakyushu-Shi Fukuoka-Ken (JP)**
Inventor: **Fujii, Hajime**
**12-28, Kosagida-Machi Yahatanishi-Ku**
**Kitakyushu-Shi Fukuoka-Ken (JP)**
Inventor: **Hamashima, Toyoji**
**489-6, Oaza-Nakama Nakama-Shi**
**Fukuoka-Ken (JP)**

(74) Representative: **Reichel, Wolfgang, Dipl.-Ing. et al**
**Reichel und Reichel Parkstrasse 13**
**D-6000 Frankfurt am Main 1 (DE)**

Courier Press, Leamington Spa, England.

**Description**

This invention relates to a method as stated in the first part of the present claim 1.

In the case of a conventional teaching playback robot, it is necessary to teach newly all the coordinate data of the work points of an object and to memorize those in the memory for performing the programmed operation of the robot, namely for performing the playback operation, even if a number of workpieces similar in configuration are included in the object or even when the robot handles the same objects set on a plurality of jigs.

Namely, even when the workpieces themselves are the same or of similar shape or mirror image, but only the relative positions between the robot and the workpieces differ, all the coordinate data of the work points of the workpieces must be taught newly.

Furthermore, when a working tool is deformed accidentally, the shifted positions must be amended by changing all the coordinate data of the work points which have been taught to all the operating parts.

Teaching data to the robot takes a lot of time and labor. Therefore, simplification of the teaching operation is practically essential in order to improve the operability of the robot and more simple teaching method is needed.

If, in the case where a number of robots are operated in a mass production line, any one of the robots becomes out of order, then it is necessary that the robot is replaced by an auxiliary robot immediately so that the production need not be stopped.

In order to replace the robot, it is essential that the robots are interchangeable and that the relative position of the robot, the jig and the object to be handled by the robot must be strictly controlled and a mechanismus for adjusting the relative position must be provided. However, these requirements involve various technical problems to be solved and it is unprofitable to satisfy all the requirements. Therefore, there has been a strong demand for the provision of an inexpensive method which ensures the interchanging of robots and simplifies the teaching operation.

The publication Automatic Welding, Vol. 33, July 1980, No. 7, pages 26 to 29, concerns a robot control system having the general character set forth in the first part of the present claim 1.

Patent document US—A—3 839 800 discloses a process whereby a programmed machine tool is operated in such a way as to correct deviations of the workpiece from some standard position. In contrast to the present invention, the prior patent requires at least four points to define the position and orientation of the workpiece.

Neither of the above documents considers the possibility that the tool or robot, as well as the object to be worked on, may be subjected to deviations in position or orientation.

Accordingly, the invention aims to provide a method as stated in the first part of the present claim 1, by which the possibility is considered that the tool or robot, as well as the object to be worked on, may be subject to deviations in position or orientation.

The solution of this problem is stated in the second part of the present claim 1. This solution has the advantage that when the robot handles a number of objects similar in configuration, any teaching operaiton is simplified, when a robot requires repair it can be replaced by an auxiliary robot immediately, and when a working tool is deformed and shifted positions can be readily amended.

Further developments of the present invention are stated in subclaims, by which the memory capacity of the robot is reduced and the speed of calculation is increased in comparison with the prior art.

The nature, principle and utility of the invention will become more apparent from the following detailed description when read in conjunction with the accompanying drawings.

In the accompanying drawings:

Fig. 1 is an explanatory diagram for a description of the principle of this invention;

Fig. 2 is a perspective view showing an object having a number of congruent workpieces, for a description of one example of a teaching operation according to the invention;

Fig. 3 is a perspective view showing one robot which handles a number of similar objects, for a description of another example of the teaching operation according to the invention;

Fig. 4 is an explanatory diagram, for a description of a robot exchanging operation according to the invention;

Fig. 5 is a perspective view showing a plurality of robots handling a plurality of similar objects, for a description of another example of the teaching operation according to the invention;

Fig. 6 is an explanatory diagram for a description of the application of the invention to amendment of the coordinate data which have been taught when a working tool is deformed;

Fig. 7 is a diagram for a description of mirror image shifting;

Fig. 8 is a model diagram showing a work point and three representative points on objects in Fig. 1;

Fig. 9 is a model diagram showing an articulated robot;

Fig. 10a is an external view showing the wrist of an articulated robot and a tool coupled to the wrist;

Figs. 10b through 10e are explanatory diagrams for a control description of the tool orientation;

Fig. 11 is a block diagram showing a locus shift controller, i.e. new coordinate data generator of the work points comprising arithmetic units, and a microprocessor for controlling the operation of a robot; and

Fig. 12 is a block diagram showing the microprocessor and axis drive circuits which are driven by command from the microprocessor.

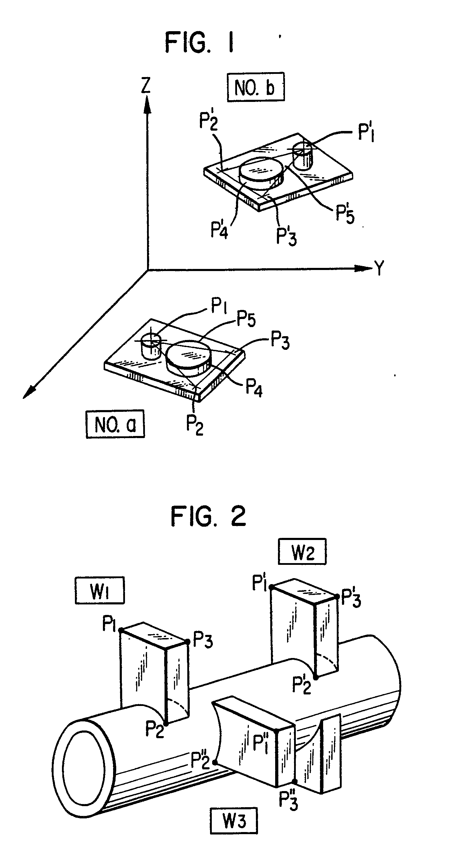

As conductive to a full understanding of this invention, first the principle of the invention will be described with reference to Fig. 1.

Let us consider that the case where an object or a workpiece, which is handled with a robot, is moved from a location No. a to a location No. b.

It is assumed that the coordinate data of three representative points $P_1$, $P_2$ and $P_3$ (hereinafter referred to as "first three representative points") of the object at the location No. a and the work points (for instance welding lines) $P_4$, $P_5$... and $P_n$... (hereinafter referred to as "first work points") of the object at the location No. a have been taught to the robot.

The work points of the robot are designed by $P_4$, $P_5$,..., $P_n$. Even if one of the work points $P_n$ coincides with one of the three representative points, this is nothing but an incidental coincidence of the results of the teaching carried out for the latter because of the significant feature, and such point cannot be used as a work point during the playback operation.

The corresponding representative points $P_1'$, $P_2'$ and $P_3'$ (hereinafter referred to as "second three representative points") of the object which is moved to the location No. b are taught to the robot. The positional data of the work points, namely the coordinate data of the work points, $P_4'$, $P_5'$, ..., $P_n'$... at the location No. b (hereinafter referred to as "second work points") are automatically obtained by carrying out the vector calculation by use of the coordinate data of a first work point, the first three representative points, and the second three representative points, which are described below. The amount of shift in three-dimensional rotation plus parallel movement from a surface defined by the points $P_1$, $P_2$ and $P_3$ to a surface defined by the points $P_1'$, $P_2'$ and $P_3'$ is obtained, so that the positional data of new work points $P_4'$, $P_5'$, ... and $P_n'$... (herainafter referred to as "second work points") automatically obtained by carrying out the calculation which is equivalent to the translation of the relationship between the work points $P_4$, $P_5$, ... and $P_n$ and the surface defined by the points $P_1$, $P_2$ and $P_3$ to the surface defined by the points $P_1'$, $P_2'$ and $P_3'$.

In other words, merely by teaching the second three representative points $P_1'$, $P_2'$ and $P_3'$, the positional data of all the second work points $P_4'$, $P_5'$, ... and $P_n'$ of the object at the location No. b are automatically provided. Thus, the efficiency of teaching operation is greatly improved.

Fig. 2 shows one example of the teaching in which the above-described technical concept is applied to an object in which a number of similar workpieces are arranged. In this case, merely by teaching the welding lines (the coordinate data of the first work points) and the coordinate data of the first three representative points $P_1$, $P_2$ and $P_3$ of a workpiece $W_1$, the coordinate data of the second three representative points $P_1'$, $P_2'$ and $P_3'$ of a workpiece $W_2$, the coordinate data of the second three representative points $P_1'$, $P_2'$ and $P_3'$ of a workpiece $W_2$, the coordinate data of the second three representative points $P_1''$, $P_2''$ and $P_3''$ of a workpiece $W_3$ and so forth, the positional data of the welding lines of the workpieces $W_2$, $W_3$ and so forth, namely the coordinate data of the second work points, are automatically provided.

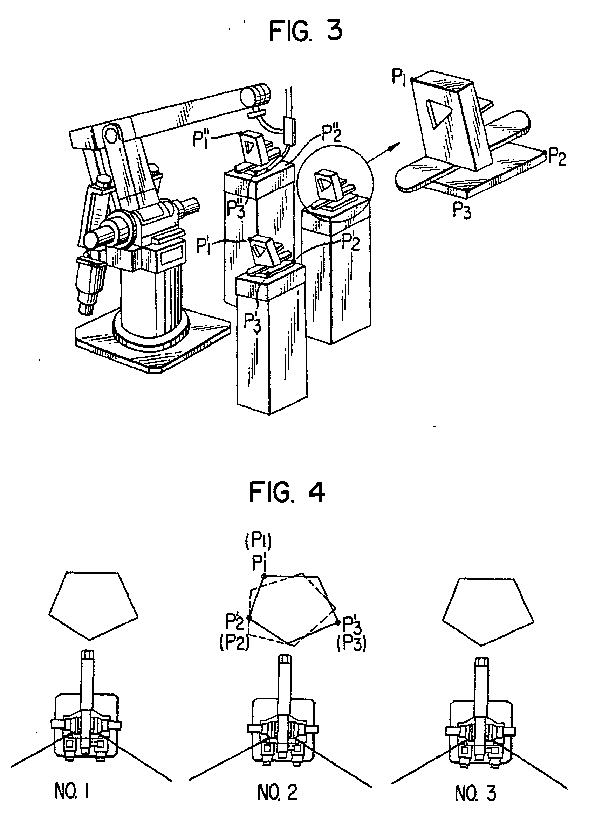

Fig. 3 shows one example of the teaching in the case where one robot handles objects which are similar in configuration and are set on a plurality of jigs, respectively. In general, in the case of an industrial robot, a single robot handles objects set respectively on two or three jigs, and while the robots handles one object, another object is loaded on another jig; that is, loading and unloading an object and handling another object with the robot are carried out in a parallel mode, so that the idling time of the robot is eliminated to provide an effective or efficient work system. In this case also, merely by teaching the robot the coordinate data of the first work points of an object on one jig and also only the coordinate data of the first and second three representative points $P_1$, $P_2$, $P_3$, $P_1'$, $P_2'$, $P_3'$, $P_1''$, $P_2''$, $P_3''$, respectively and so on, all the positional data of the other objects on the other jigs, namely the coordinate data of the second work points, are automatically provided, respectively.

Fig. 4 is an explanatory diagram for a description of a robot interchangeability which is required in exchanging robots. In the case where a plurality of robots are operated in a large scale production line, a robot interchangeability function is required so that, immediately when a robot becomes out of order, it is replaced by another one and the new robot is operated with the same teaching data (as that of the old robot since the same control device is used). However, since the robots are not always equal in mechanical dimension and the relative position of the jig and the robot is, in general, shifted during the robot exchanging operation, the robot interchangeability cannot be achieved merely by replacing the troubled robot. When a robot No. 2 (Fig. 4) is replacecd by an auxiliary robot, the locus (solid line) of the robot No. 2, which was drawn before it became out of order, is shifted as indicated by the dotted line. The first three representative points $P_1$, $P_2$ and $P_3$ on the locus (solid line) have been taught to the robot and stored in a memory in the control device. Under this condition, only the second three representative points $P_1'$, $P_2'$ and $P_3'$ of the objects are taught to the auxiliary robot. Then, all the positional data indicated by the dotted line are automatically amended to the positional data indicated by the solid line by means of the vector calculation by use of the first three representative points and the second three representative points, as described below. Thus, the robot has been replaced by the auxiliary robot correctly.

Although the points $P_1$, $P_2$ and $P_3$ of the object are the same points $P_1'$, $P_2'$ and $P_3'$ of the same object, respectively, the data indicated by the dotted line become the data indicated by the solid line, because the points $P_1$, $P_2$ and $P_3$ taught to the troubled robot are different from the points $P_1'$, $P_2'$ and $P_3'$ taught to the auxiliary robot in the pulse values from the orignal points of the robot drive axes. Owing to this function, control of the relative position between the robot and the jig is unnecessary, and the troubled robot can be replaced by the auxiliary robot correctly.

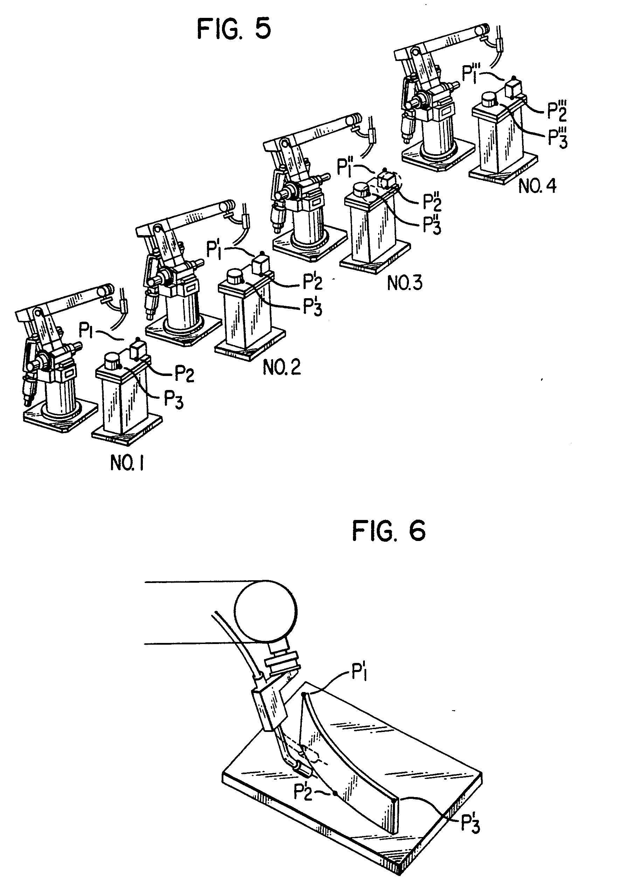

Fig. 5 shows one example of the teaching according to the function in the case where a plurality of robots handle objects each of which has the same configuration. In this case, teaching is effected with one robot No. 1, and the coordinate data of the first work points are stored in a cassette tape and are then inputted to the control devices of robots No. 2, No. 3, No. 4 and so on. With the data thus inputted, the robots No. 2, No. 3, No. 4 and so on cannot be operated, because the robots are different in mechanical dimension or the relative positions between the robots and the jigs are different, which causes the working position of each robot to deviate. The position deviation of the robot No. 3 is as indicated by the broken lines, by way of example. In this case, all the positions deviations can be automatically amended merely by teaching the second three representative points $P_1'$, $P_2'$, $P_3'$, $P_1''$, $P_2''$, $P_3''$ and so on of the robots No. 2, No. 3 and so on according to the above-described function.

Fig. 6 is an explanatory diagram for a description of the case where the above-described function is employed to amend data which have been taught when a work tool is deformed. In teaching, sometimes the operator strikes the work tool against the jig or the like accidentally to deform the tool. In general, in the case where various products are manufactured on small scale by one robot, job data are provided in correspondence to the number of kinds of products. If the deformed tool is operated according to the job data which have been stored in the control device, then the position of the tool is caused to deviate as shown by the dotted line in Fig. 6. This difficulty may not be eliminated by repairing the deformed tool or by replacing it by a new one. However, since tools are, in general, not interchangeable, the amount of positional deviation cannot be completely eliminated, although it may be reduced. In such a case, the above-described function is effective. Automatic amendment to job data including no positional deviation can be achieved merely by teaching the second three representative points $P_1'$, $P_2'$ and $P_3'$.

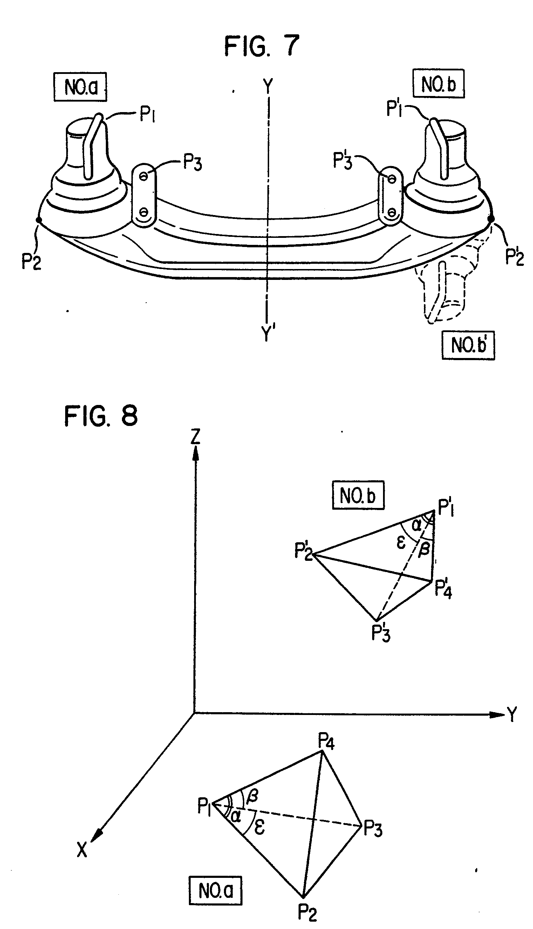

Fig. 7 shows an example of a mirror image type shift, which is different from the three-dimensional rotation plus parallel movement shift as explained from Fig. 2 to Fig. 6. An object is not coincided with an object No. b no matter how it is turned or moved in parallel, because the objects No. a and No. b are not congruent with each other and are symmetrical with each other with respect to a plane including a line Y—Y', as frequently found with symmetrical parts such as vehicle members. When the object No. a is turned and moved in parallel, then it comes to such position as shown by No. b', and in this case the object (No. b') is a mirror image of the object No. b. One object is first turned and moved in parallel so that it is in contact with and in symmetry with the other object with respect to a plane, and then the mirror image shift is effected in symmetry with the plane. Then, similarly as in the cases of Figs. 2 through 6, the positional data of the object No. b for work, namely the coordinate data of the second work points can be automatically provided merely by teaching the teaching data in No. a and the first three representative points $P_1$, $P_2$ and $P_3$ of the object No. a and the second three representative points $P_1'$, $P_2'$ and $P_3'$ of the object No. b.

As was described above, the invention is intended to provide a locus shift control method for calculating the positional data of a plurality of axes of the robot arms and also the positional data of the wrist which properly correct the wrist operation condition, in which, merely by teaching three representative points, teaching is simplified in handling objects similar in configuration with a robot, robots can be exchanged correctly, teaching can be simplified when a gun is deformed, and teaching can be simplified when a robot handles an object having parts which are symmetrical in mirror image manner.

The invention will be described in more detail.

Fig. 8 is a model diagram extracting the first three representative points $P_1$, $P_2$, $P_3$ and a first work point $P_4$, and the second three representative points $P_1'$, $P_2'$, $P_3'$ and a second work point $P_4'$ in Fig. 1. The problem, in this case, is to obtain the coordinate data of the second work point $P_4'$ from the coordinate data of the points $P_1$, $P_2$, $P_3$, $P_1'$, $P_2'$, $P_3'$ and $P_4$. Similarly, the coordinate data of other second work points $P_5'$, ... $P_n'$, ... can be obtained by successively replacing the coordinate data of the first work point $P_4$ with the coordinate data of the first work points $P_5$, ...$P_n$, ...

The coordinate data of the taught points $P_1$, $P_2$, $P_3$, $P_1'$, $P_2'$, $P_3'$ and $P_4$ are as follows:

$$
\begin{array}{ll}
P_1(X_1, Y_1, Z_1) & P_1'(X_1', Y_1', Z_1') \\
P_2(X_2, Y_2, Z_2) & P_2'(X_2', Y_2', Z_2') \\
P_3(X_3, Y_3, Z_3) & P_3'(X_3', Y_3', Z_3') \\
P_4(X_4, Y_4, Z_4) &
\end{array}
\tag{1}
$$

$\angle P_2P_1P_4 = \alpha$, $\angle P_3P_1P_4 = \beta$ and $\angle P_2P_1P_3 = \varepsilon$ are internal angles of $\Delta P_2P_1P_4$, $\Delta P_3P_1P_4$ and $\Delta P_2P_1P_3$, respectively, and can be readily obtained from the coordinate data of the points $P_1$, $P_2$, $P_3$ and $P_4$.

As the same object is merely moved, these angles remain unchanged. Therefore $\angle P_2'P_1'P_4' = \alpha$, $\angle P_3'P_1'P_4' = \beta$ and $\angle P_2'P_1'P_3' = \varepsilon$.

The direction cosine (l, m, n) of $\overline{P_1'P_2'}$ and the direction cosine (h, i, j) of $\overline{P_1'P_3'}$ can be readily obtained from the coordinate data of the points $P_1'$, $P_2'$ and $P_3'$.

Accordingly, the direction cosine (a, b, c) of $\overline{P_1'P_4'}$ is defined by the following expression (2):

$$a=f_1\ (\alpha,\beta,\varepsilon,l,m,n,h,i,j)$$
$$b=f_2\ (\alpha,\beta,\varepsilon,l,m,n,h,i,j)$$
$$c=f_3(\alpha,\beta,\varepsilon,l,m,n,h,i,j)$$
$$(2)$$

In the case of mirror image, the direction cosine (a, b, c) is defined by the following expression (3):

$$a=f'_1(\alpha,\beta,\varepsilon,l,m,n,h,i,j)$$
$$b=f'_2(\alpha,\beta,\varepsilon,l,m,n,h,i,j)$$
$$c=f'_3(\alpha,\beta,\varepsilon,l,m,n,h,i,j)$$
$$(3)$$

$\overline{P_1P_4}(=L)$ is obtained from the coordinates of the points $P_1$ and $P_4$. As $\overline{P_1'P_4'}=L$, the coordinates $X_4'$, $Y_4'$, $Z_4'$ of the point $P_4'$ can be obtained from the following expression (4):

$$X_4'=X_1'+L\cdot a$$
$$Y_4'=Y_1'+L\cdot b$$
$$Z_4'=Z_1'+L\cdot c$$
$$(4)$$

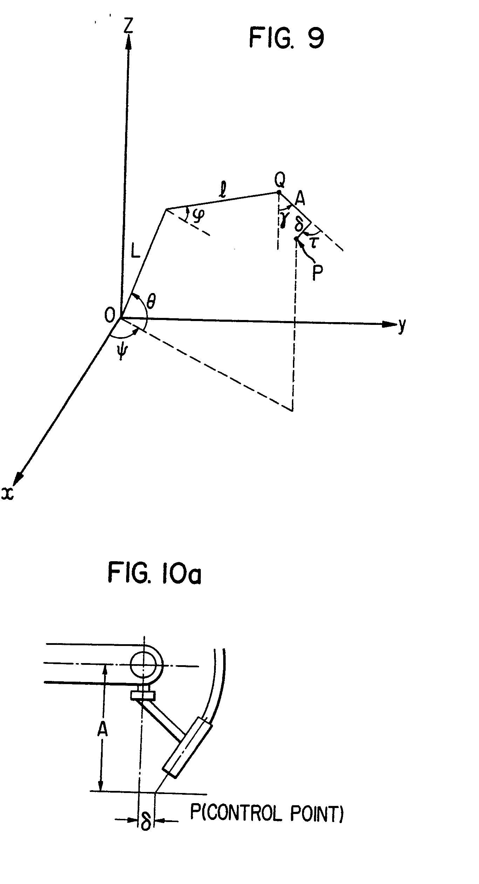

In the expression (4), the coordinate data of a second work points $P_4'$ is obtained according to $\overline{P_1P_4}$; however, it goes without saying that the coordinate data may be obtained according to $\overline{P_2P_4}$ or $\overline{P_3P_4}$. Furthermore, the average coordinate data of the point $P_4'$ may be obtained by averaging three different coordinate data of the point $P_4'$ which are obtained according to $\overline{P_1P_4}$, $\overline{P_2P_4}$ and $\overline{P_3P_4}$, respectively. In either of the cases, the coordinate data of a second work point $P_4'$ are obtained. More generally, the coordinate data of a second work point $P_n'(X_n', Y_n', Z_n')$ are obtained, and by successively renewing the number n, coordinate data for all the second work points are acquired. As is well known in the art of teaching playback robot, beside of the coordinate data determination as described above it is required to determine the orientation of working tools which are held by the wrist of the robot during the robot operation. As is shown in Fig. 9, a robot is controlled according to five axes $(\psi,\theta,\varphi,\gamma,\tau)$, and therefore the teaching of the wrist is effected together with that of points $P_1$, $P_2$, $P_3$, $P_1'$, $P_2'$ and $P_3'$.

In general, the posture of the wrist, i.e. the orientation of the tool with respect to the working path, is determined according to the content of work which should be done by the robot, and an object which is handled by the robot. For instance in the case of an arc welding robot, the posture of the wrist is controlled so that a welding torch angle and a welding torch advancing angle along the welding line of an object are maintained within the range suitable for the welding operation.

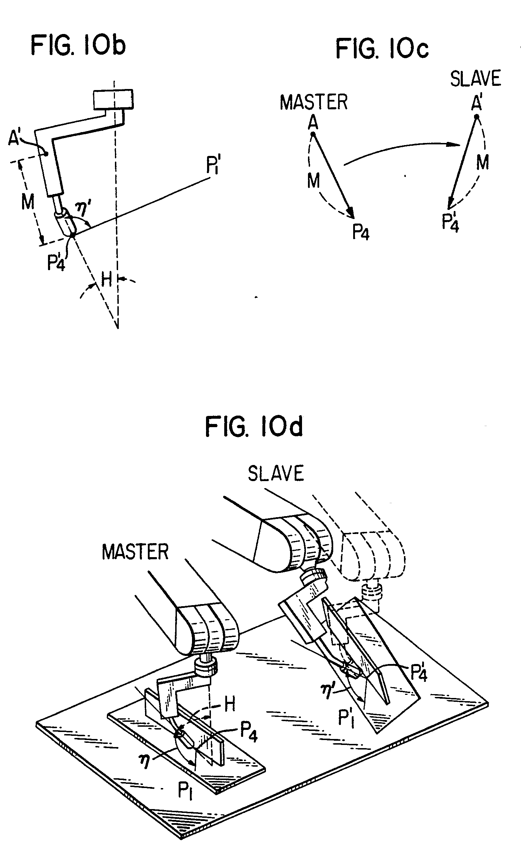

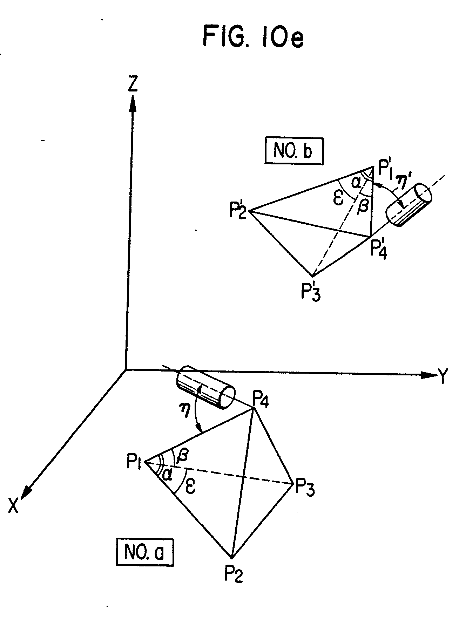

Since the objects No. a and No. b in Fig. 8 are at different locations, the wrist posture, i.e. the orientation of the tool with respect to the work path for the object No. a is different from that for the object No. b, if the wrist angles at the second work points $P_4'$, $P_5'$, ..., $P_n'$, ... are of the same values as those at the first work points $P_4$, $P_5$, ..., $P_n$, .... Herein, for the convenience of explanation, an articulated robot of 5 axis-control shown in Fig. 9, which has 2 axes for the wrist will be considered. Accordingly, the wrist angles for the points $P_4'$, $P_5'$, ... $P_n'$, ... cannot be used for the points $P_4$, $P_5$, ... $P_n$ ..., as they are. For this reason, when the wrist bending axis ($\gamma$: variable) and the wrist turning axis ($\tau$: variable) take, as shown in Figs. 9 and 10, positions represented by the following points $P_1\ (\gamma_1, \tau_1)$, $P_2(\gamma_2, \tau_2)$, $P_3(\gamma_3, \tau_3)$, $P_1'(\gamma_1', \tau_1')$, $P_2'(\gamma_2', \tau_2')$ and $P_3'(\gamma_3', \tau_3')$, $\Delta\gamma$ and $\Delta\tau$ are calculated by the following equations (5).

$$\Delta\gamma=g_1(\gamma_1', \gamma_1, \gamma_2', \gamma_2, \gamma_3', \gamma_3)$$
$$\Delta\tau=g_2(\tau_1', \tau_1, \tau_1', \tau_2, \tau_3', \tau_3)$$
$$(5)$$

(where $g_1$ and $g_2$ shows symbols representing function, respectively).

Thus, the wrist angle of a robot in a new location No. b can be amended by adding $\Delta\gamma$ and $\Delta\tau$ to the wrist angle taught in a previous location No. a. Namely, point $P_4'$ $(\gamma_4', \tau_4')$ can be obtained from the teaching data $P_4$ $(\gamma_4, \tau_4)$ by the following equation (6) thereby to effect correct amendments to the wrist angle.

$$\gamma_4'=\gamma_4+\Delta\gamma$$
$$\tau_4'=\tau_4+\Delta\tau$$
$$(6)$$

The data $\Delta\tau$ and $\Delta\gamma$ can be obtained in various methods. For instance, a method may be employed in which $\Delta\tau$ and $\Delta\gamma$ are defined by the average value of the difference between the angles of the robot wrist axis respectively when the operation end of the robot are at the first and second representative points. Alternatively, a method may be employed in which $\Delta\tau$ and $\Delta\gamma$ are defined by the difference between the wrist axis angle at the first representative points where the difference between the wrist axis angles respectively when the operation end of the robot is at the first representative point and the first work point, is minimum, and the wrist axis angle at the second representative point corresponding to the first representative point. The latter method is effective in the case where the wrist axis posture is greatly changed.

In the case of a cartesian coordinates robot, the coordinates of the points, $P_1$, $P_2$, $P_3$, $P_4$, $P_1'$, $P_2'$ and $P_3'$

are stored in terms of X, Y, Z, and therefore $P_4'$ $(X_4', Y_4', Z_4', \gamma_4', \tau_4')$ can be obtained from the expressions (1) through (6). In the case of an articulated robot, a cylindrical coordinates robot or a polar coordinates robot, the taught data of the drive axes must be subjected to orthogonal coordinate transformation to obtain the expression (1). The data $X_4', Y_4', Z_4'$ except the data $\gamma_4', \gamma_4'$ of the wrist are required to inversely trnsform their coordinates into those which are proper to each of three drive axes of the robot.

Fig. 9 shows a model of an articulated robot. The swivel axis, the lower arm axis L and the upper arm axis I are controlled by rotation angles $\psi$, $\theta$ and $\varphi$, respectively. The wrist bending axis, and the wrist turning axis are controlled by rotation angles $\gamma$ and $\tau$, respectively.

Fig. 10a is an external view showing the wrist of the articulated robot and a tool secured to the wrist.

The point P, which is at a distance A from the center Q of rotation of the wrist bending axis and at a distance $\delta$ from the center of rotation of the wrist turning axis, is a control point to be taught. Therefore, the coordinate data of the point P in the orthogonal coordinate system are as follows:

$$\left. \begin{aligned} X &= (L\cos\theta + I\cos\varphi + A\sin\gamma + \delta\cos\tau \cdot \cos\gamma) \cdot \cos\psi - \delta\sin \cdot \sin\psi \\ Y &= (L\cos\theta + I\cos\varphi + A\sin\gamma + \delta\cos\tau \cdot \cos\gamma) \cdot \sin\psi + \delta\sin\tau \cdot \cos\psi \\ Z &= L\sin\theta + I\sin\varphi - A\cos\gamma + \delta\cos\tau \cdot \sin\gamma \end{aligned} \right\} \qquad (7)$$

As the data $\gamma_4', \tau_4'$ of the wrist axis have been defined according to the expression (6), the coordinate data of the second work point $P_4'$ $(\psi_4, \theta_4, \varphi_4', \gamma_4', \tau_4')$ on the articulated axis are defined by the following expression (8) which is obtained by subjecting the expression (7) to inverse transformation.

$$\left. \begin{aligned} \psi_4' &= f_7(X_4', Y_4', Z_4', \gamma_4', \tau_4') \\ \theta_4' &= f_9(X_4', Y_4', Z_4', \gamma_4', \tau_4') \\ \varphi_4' &= f_9(X_4', Y_4', Z_4', \gamma_4', \tau_4') \end{aligned} \right\} \qquad (8)$$

In general, in a robot teaching operation, not only teaching of points to be taught but also teaching of the posture of a tool connected to the robot wrist with respect to a workpiece are essential.

In the case of a welding robot, the wrist axes are taught so that a torch coupled to the wrist holds angles (a torch angle and an advancing angle) necessary for welding with respect to the welding line of a workpiece.

If the posture of the torch with respect to the welding line at each of the teaching points (first work points) at location No. a is the same as the posture with respect to the welding line at each of the corresponding points (second work points) at location No. b which are three-dimensionally shifted, then a posture necessary for work can be obtained.

For this purpose, the angle between a surface defined by the first three representative points and a torch at each teaching point (first work point) at location No. a must be the same as those on the three-dimensionally shifted location No. b, respectively.

In practice, the wrist axes must be so controlled that the angle between a line connecting one of the three representative points to the work point and the axis of the torch connected to the wrist is maintained unchanged or substantially unchanged before and after three-dimensional locus shifting.

In Fig. 10b, $P_1'$ designates one of the second three representative points at the location No. b; $P_4'$, a second work point; and A', an arbitrary point on the central axis of a welding torch connected to the robot wrist.

In this case, an angle $\eta'$ between line segments $\overline{P_1'P_4}'$ and $\overline{A'P_4}'$ should be controlled.

In this case, an angle $\eta'$ between line segments $\overline{P_1'P_4}'$ and $\overline{A'P_4}'$ and, at the same time, either an angle between line segments $\overline{P_2'P_4}$ and $\overline{A'P_4}'$ or an angle between line segments $\overline{P_3'P_4}'$ and $\overline{A'P_4}'$ should be controlled.

Taking one point $P_1$ of the first three representative points and one point $P_1'$ of the second three representative points up, the method for accomplishing this purpose is described hereunder.

In this case, it is necessary to define an angle H. The angle H is intended to mean the angle between the center of rotation of a wrist turning axis and an axis line of a welding torch. A method for obtaining coordinates $(X_A, Y_A, Z_A)$ for the point A, and then obtaining the coordinates for the point A' in a similar manner as that described for obtaining the coordinates of the point $P_4'$ from the coordinates of the point $P_4$ will not be described. The direction cosine (a, b, c) of $\overline{P_4A}$ is expressed by the following expression (9).

$$\left. \begin{aligned} a &= f_1(\gamma_4, \psi_4, \tau_4, H) \\ b &= f_2(\gamma_4, \psi_4, \tau_4, H) \\ c &= f_3(\gamma_4, \psi_4, \tau_4, H) \end{aligned} \right\} \qquad (9)$$

$\psi_4$, $\gamma_4$ and $\tau_4$ have been taught at the time of teaching the first work point $P_4$.

Now, as shown in Fig. 10b and Fig. 10c, a length M from a work point is internally defined on the central axis of a welding torch.

The coordinates $(X_A, Y_A, Z_A)$ of a point A at the location No. a are:

$$X_A = X_4 + aM$$
$$Y_A = Y_4 + bM \qquad (10)$$
$$Z_A = Z_4 + cM$$

It is assumed that, after the three-dimensional locus shifting, the point according to the point A is the point A′ at the location No. b.

By a similar method according to which the data for the point $P_4′$ have been obtained from the coordinates for the points $P_1$, $P_2$, $P_3$, $P_1′$, $P_2′$, $P_3′$ and $P_4$, as described preceding to the equations (4), the coordinates $(X_A′, Y_A′, Z_A′)$ for the point A′ can be determined. That is, simply converting $X_A \rightarrow X_4$, $Y_A \rightarrow Y_4$, and $Z_A \rightarrow Z_4$ in equations (10), the equations described prior to the equations (4) are calculated.

It is assumed that the coordinates of the point A′ thus obtained are represented to be $(X_A′, Y_A′, Z_A′)$.

From the coordinate data $(X_4′, Y_4′, Z_4′)$ of the point $P_4′$, which have been determined by the equations (4), the angle $\psi_4′$ of an arm is:

$$\psi_4′ = \tan^{-1} \frac{Y_4}{X_4} \qquad (11)$$

Thus, the direction cosines $(a′, b′, c′)$ of $P_4′A′$ are:

$$a′ = f_1(\gamma_4′, \psi_4′, \tau_4′, H)$$
$$b′ = f_2(\gamma_4′, \psi_4′, \tau_4′, H) \qquad (12)$$
$$c′ = f_3(\gamma_4′, \psi_4′, \tau_4′, H)$$

Also, a′, b′ and c′ can be readily obtained from the coordinates of the points $P_4′$ and A′.

$$a′ = g_1(X_4′, X_A′, M)$$
$$b′ = g_2(Y_4′, Y_A′, M) \qquad (13)$$
$$c′ = g_3(Z_4′, Z_A′, M)$$

From the already obtained points $P_4′$ $(X_4′, Y_4′, Z_4′)$, $A′(X_A′, Y_A′, Z_A′)$ and angles $\psi_4$ and H, and also from the internally defined value M and equations (12) and (13), $\gamma_4′$ and $\tau_4′$ are obtained as follows:

$$\tau_4′ = F_1(\psi_4, H, M, X_4′, Y_4′, X_A′, Y_A′)$$
$$\gamma_4′ = F_2(\psi_4′, H, M, X_4′, Y_4′, Z_4′, X_A′, Y_A′, Z_A′) \qquad (14)$$

These relationships are illustrated in Fig. 10d and 10e. As is apparent from the above description, the wrist axis is controlled at the location No. b so that its posture indicated by the dotted line in Fig. 10d is changed to one indicated by the solid line.

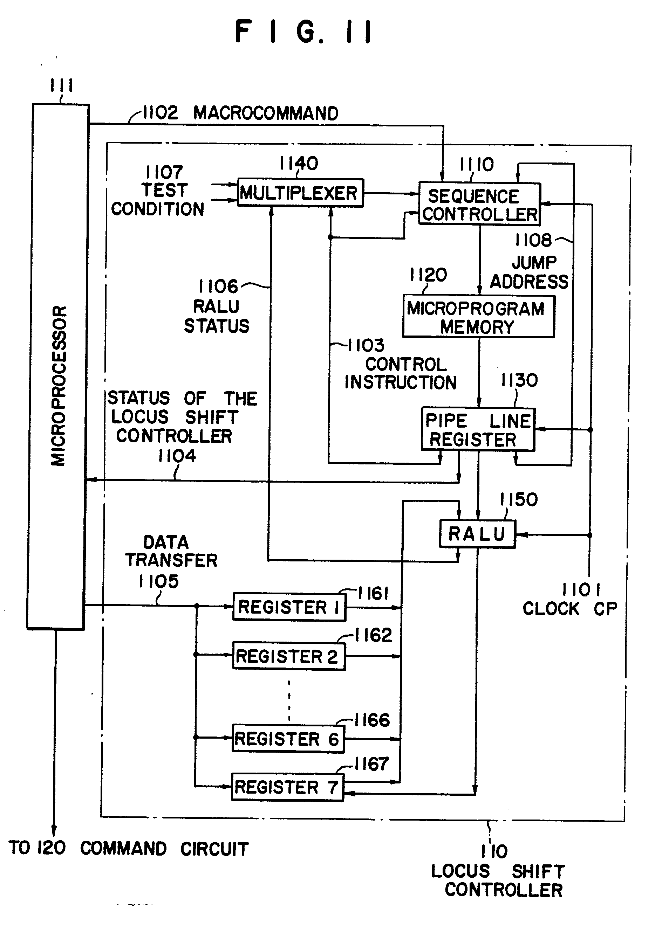

Fig. 11 is a block diagram showing a locus shift controller comprising arithmetic units, and a microprocessor for controlling the operation of a robot, according to one embodiment of the invention.

When a status 1104 of the locus shift controller 110 is in a wait state and locus shift data are required, the microprocessor 111 reads the coordinate data of the points $P_1$, $P_2$, $P_3$, $P_1′$, $P_2′$, $P_3′$ and $P_4$ out of a memory (not shown) and sets them in registers "1" through "7" 1161 through 1167 (through data transfer 1105), and outputs a locus shift data forming macrocommand 1102.

The locus shift controller 110 is made up of a sequence controller 1110, a microprogramm memory 1120, a pipe line register 1130, a multiplexer 1140, an RALU (register and arithmetic logical unit) 1150 and the aforementioned registers "1" through "7" 1161 through 1167.

The sequence controller 1110 is an address controller for controlling the execution sequence of microinstructions stored in the microprogramm memory 1120. The sequence controller 1110 carries out various addressing operations and stack controls in response to control instructions from the pipe line register 1130. More specifically, the sequence controller 1110 deals with increment of an address being executed, address selection specified by a macrocommand 1102, jump address selection 1108 which is provided by the pipe line register 1130 in the case of a conditional jump according to the test condition 1107 of an RALU status 1106, a jump address section 1108 which is provided by the pipe line register 1130 in the case of a non-conditional jump, and stack control at the time of microsubroutine call.

Input data for addressing are the macrocommand 1102, and an output 1108 of the pipe line register 1130.

Depending on the microprogram, i.e., the control instruction 1103 from the pipe line register 1130, it is determined whether the sequence controller 1110 selects one of the two input data or selects none of the two input data to carry out the current address increment. Two locus shift data forming macrocommands, namely, a three-dimensional locus shifting command and a mirror image shifting command are used.

The commands are provided in such a manner as to indicate the top address of a locus shift data forming microprogram, in view of hardware.

The microprogram memory 1120 is an essential element in the locus shift controller 110, and all arithmetic operations are carried out according to instructions from the microprogram memory 1120.

The pipe line register 1130 is a buffer register for the microprogram memory 1120. The pipe line register 1130 applies an operating microinstruction to be executed at the present to the RALU 1150, applies a control instruction 1103 for determining the next microaddress to the sequence controller 1110 and the multiplexer 1140, and applies a jump address 1108 and a subroutine call address to the sequence controller 1110. Also, a status 1104 signal for indicating "BUSY" (locus shift data are under preparation) and "wait" is outputted to the microprocessor 111.

The pipe line register 1130 forms two signal paths in such a manner that operations in the signal paths are carried out in a parallel mode, to reduce micro cycle time, thereby increasing processing speed.

One of the signal paths is of the control system, consisting of the pipe line register 1130, the sequence controller 1110 and the microprogram memory 1120, and the other is of the arithmetic system, consisting of the pipe line register 1130 and the RALU 1150. The pipe line register 1130 is provided to permit the operations in the two paths to be performed simultaneously in the same clock cycle.

At the rise of a clock CP 1101, the next instruction of the microprogram prepared in the path of the control system is applied to the input of the pipe line register 1130. Therefore, a high speed operation, in which the memory fetch time is substantially zero, can be carried out.

The multiplexer 1140 applies the test condition 1107 of the RALU status 1106 to the sequence controller 1110 according to the control instructions from the pipe line register 1130, to cause the sequence controller 1110 to execute the conditional jump.

The RALU 1150 comprises a logic and arithmetic operation unit and programmable registers and carries out operation instructions specified by the microprogram memory 1120. The operation result, i.e., the locus shift data $P_4'$ is stored in the register "7" 1167.

The registers "1" through "6" 1161 through 1166 store the coordinate data of the points $P_1$, $P_2$, $P_3$, $P_1'$, $P_2'$ and $P_3'$. Initially the coordinate data of a first work point $P_n$, which is to be shifted, is set in the register "7" 1167. After the shift data has been formed, the coordinate data shifted, namely the data of a second work point $P_n'$ is set in the register "7" 1167.

Formation of the locus shift data will be described with reference to Fig. 11.

Initially, the locus shift controller executes a wait routine and then the pipe line register 1130 applies a wait status signal (1104) to the microprocessor 111. Upon reception of the locus shift data forming macrocommand 1102, the sequence controller 1110 carries out address control so as to execute the wait routine, while receiving the control instructions 1103 for selecting the top address of the service microprogram from the pipe line register 1130.

Before starting the locus shift, the microprocessor 111 sets the coordinate data of the points $P_1(X_1, Y_1, Z_1, \gamma_1, \tau_1)$, $P_2(X_2, Y_2, Z_2, \gamma_2, \tau_2)$, $P_3(X_3, Y_3, Z_3, \gamma_3, \tau_3)$, $P_1'(X_1', Y_1', Z_1', \gamma_1', \tau_1')$, $P_2'(X_2', Y_2', Z_2', \gamma_2', \tau_2')$, $P_3'(X_3', Y_3', Z_3', \gamma_3', \tau_3')$ and the coordinate data of the point $P_4(X_4, Y_4, Z_4, \gamma_4, \tau_4)$ to be shifted in the registers "1" through "7" 1161 through 1167, in the case of a cartesian coordinates robot.

For instance in the case of an articulated robot, the coordinate data of the points $P_1(\psi_1, \theta_1, \varphi_1, \gamma_1, \tau_1)$, $P_2(\psi_2, \theta_2, \varphi_2, \gamma_2, \tau_2)$ and so forth are set in the registers "1" through "7".

When the microprocessor 111 outputs the locus shift data forming macrocommand 1102, the service program is executed, and the status 1104 becomes busy.

In the case of the articulated robot, the locus shift controller obtains the expression (1) from the expression (5) by using the coordinates set in the registers "1" through "7" 1161 through 1167.

In the case of the cartesian coordinates robot, the expression (1) is given by the registers "1" through "7" 1161 through 1167.

The data $\alpha$, $\beta$, $\varepsilon$, l, m, n, h, i and j are calculated, so that the direction cosines (a, b, c) are obtained according to the expression (2) in the case of the three-dimensional locus shifting macrocommand, or according to the expression (3) in the case of the mirror image shifting command, and the coordinate data X, Y, Z of the point $P_4'$ are obtained from the expression (4). The wrist posture $\gamma_4'$, $\tau_4'$ is obtained by the expressions (9)~(14).

In the case of the cartesian robot, the value $P_4'(X_4', Y_4', Z_4', \gamma_4', \tau_4')$ is set in the register "7" 1167, and the status signal 1104 comes to represent a waiting state as a result of which the locus shift controller 110 returns to a waiting routine.

In the case of the articulated robot, the data $\phi_4'$, $\theta_4'$ and $\varphi_4'$ obtained from the expression (6) and the data $\gamma_4'$ and $\tau_4'$ which have been obtained already are set in the register "7" 1167 and the locus shift controller 110 waits.

When the status signal 1104 is changed from "busy" to "wait", the microprocessor 111 transfers the contents of the register "7" 1167 to the memory (not shown).

Next, the coordinate data of a succeeding first work point $P_5$ to be newly shifted is set in the register "7" 1167, and similarly as in the above-described operation the point $P_5'$, namely the coordinate data of a succeeding second work point $P_5'$, is stored in the memory. This operation is carried out repeatedly until all the data are formed.

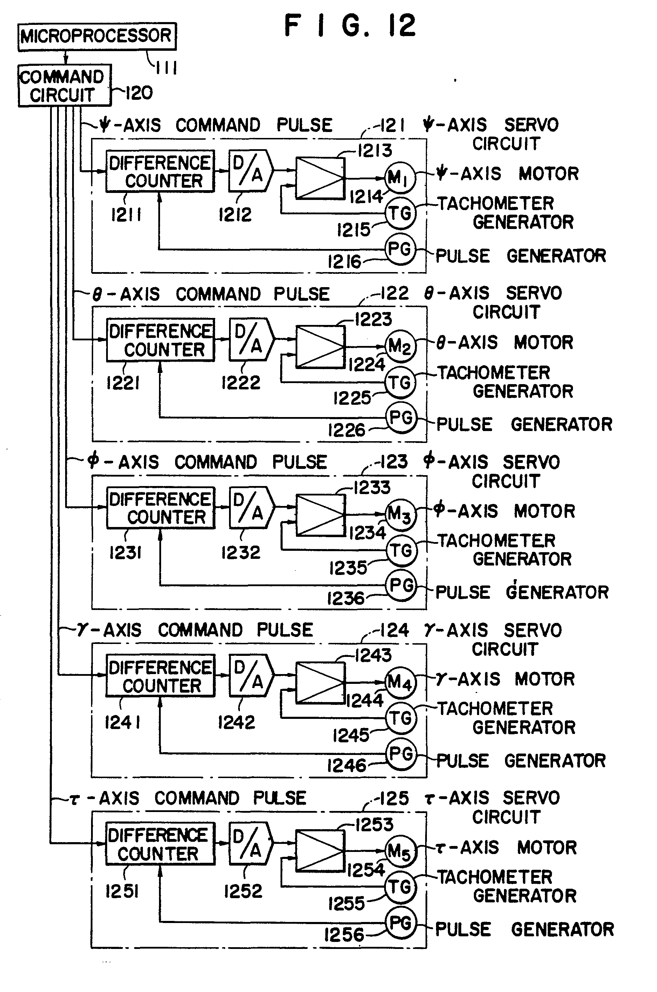

Fig. 12 shows the relationships between the microprocessor and the axis motors which are controlled by commands from the microprocessor. During the playback, positional deviation value, of each of axes at the present position of the operation point of the robot and at the point $P_4'$ is, as the number of pulses, outputted at a specified speed from the command circuit 120.

The difference between the number of axis command pulses and the number of pulses from the pulse

EP 0 062 244 B1

generator is outputted by a difference counter. The motor is controlled so that the output of the difference counter is zeroed. When the entire number of pulses between the present position and the point $P_4'$ is outputted by a command circuit 120 and the output of the difference counter becomes zero, the motor is stopped. The same operations are carried out for all the axes simultaneously.

The command circuit 120 operates to receive position pulse data from the microprocessor in Fig. 11 and to output them as axis command pulses uniformly with respect to time.

As is apparent from the above description, according to the invention, in general robots including articulated robots, cylindrical coordinates robots, polar coordinates robots, etc., the three-dimensional locus shift and mirror image shift of locus data including suitable wrist axis correection are achieved merely by correctly teaching second three representative points.

Heretofore, it was required for the operator to teach all the points, when the robot handles objects similar in configuration or mirror image objects. However, this troublesome operation can be eliminated according to the invention. That is, all the coordinate data are automatically formed merely by teaching only one object and second three representative points. Thus, the teaching operation is greatly simplified. In addition, in the case where the tool is deformed, the teaching can be readily amended.

Furthermore, in the case where it is required to replace a robot, the robot must be replaced by another robot with high accuracy; however, according to the invention, in this case, it is unnecessary to strictly control the relative location of the robot, the jig and the object. Thus, production control can be achieved readily in the case where robots are used in a mass production line. In this case, since the correction of the measurements I, L, A, δ and H from those of the old robot to those of the new robot is well known, further description of each a correction is omitted.

The above description is explained with the case where the coordinate data of first work points and first three representative points of an object are taught by the teaching operation. However, the invention is also useful to the case where these coordinate data are given in the form of numerical values which are provided by digitizing a drawing of an object or by use of any digitizer, and all the coordinate data of second work points are automatically formed through the above described method by use of these numerical coordinate data and second three representative points which are taught by the teaching operation.

## Claims

1. A method of controlling the movements of a tool-carrying robot of the kind having a wrist, with provision to corrcet for deviations in the relative dispositions of a tool attached to the robot and an object to be worked on, the method comprising:

providing a program of commands, including wrist commands, effective to cause the tool of a robot to contact a first such object ($W_1$) at a plurality of first work points ($P_4$, $P_5$, ...$P_n$) and storing that program;

providing, in association with the stored program, first co-ordinate data definitive of the relative position and orientation of the tool and the first object ($W_1$);

providing, for the purpose of likewise contacting a second object ($W_2$; $W_3$) of similar configuration to the first ($W_1$), second co-ordinate data definitive of the relative position and orientation of the tool and the second object ($W_2$; $W_3$);

performing a co-ordinate transformation in dependence on deviations between the first and second co-ordinate data and modifying the commands of the stored program in dependence on the transformation, in such manner as to provide the commands necessary to contact the second object ($W_2$; $W_3$) at second work points ($P'_4$, $P'_5$, ...$P'_n$) which are in the same position, relative to the second object, as the first work points ($P_4$, $P_4$, ...$P_n$) relative to the first object ($W_1$),

operating the robot under the command of the thus-modified program characterised in that the first coordinate data comprise the co-ordinates of only three representative points ($P_1$, $P_2$, $P_3$) of the first object ($W_1$);

and the second co-ordinate data comprise the coordinates of only three representative points ($P'_1$, $P'_2$, $P'_3$; $P''_1$, $P''_2$, $P''_3$; $P'''_1$, $P'''_2$, $P'''_3$) of the second object ($W_2$; $W_3$), the co-ordinate data of which points are determined so as to satisfy the condition that the work points and the three representative points of the second object are in a congruent and/or a mirror image relation to the first work points and the three representative points ($P_1$, $P_2$, $P_3$) of the first object and are taught to the robot, thereby ensuring that deviations in relative position and orientation are compensated for, irrespective of whether such deviations derive from displacement of the object, replacement of the robot or deformation of the tool.

2. The method of claim 1, characterized in that the first co-ordinate data of the three representative points ($P_1$, $P_2$, $P_3$) are given by teaching and/or given from outside of the robot, and inputted into a memory of the robot.

3. The method of claim 1, characterized in that the second co-ordinate data of the three representative points ($P'_1$—$P'_3$) are inputted into a memory of the robot.

4. The method of claim 1, characterized in that the second work locus represented by the second work points ($P'_4$, $P'_5$, ...$P'n$) corresponds to a longitudinal and/or rotational displacement of the first work locus.

5. The method of claim 1, characterized by;

(a) inputting angles of wrist axes, which angles correspond to each of the three representative points ($P_1$, $P_2$, $P_3$) of the first object ($W_1$), into a memory through a teaching method,

9

(b) inputting angles of wrist axes, which angles correspond to each of the three representative points $(P'_1, P'_2, P'_3, P''_1, P''_2, P''_3; P'''_1, P'''_2, P'''_3)$ of the second object, into a memory through a teaching method,

(c) calculating compensation angles from said wrist angles at each representative point of the first $(W_1)$ and the second objects $(W_2; W_3)$,

(d) adding said compensation angles to the angles of the wrist axes at each point of said first work points $(P_4, P_5, ..., P_n)$ to obtain compensated angles of the wrist axes at each point of said second work points $(P'_4, P'_5, ..., P'_n)$.

6. The method of claim 1, characterized in that the robot has a torch as a tool attached to the wrist, the method further comprising the steps of:

(a) calculating three angles which are formed with the torch axis line at one of the first work points $(P_4, P_5, ..., P_n)$ and each one of three lines connecting one of the first work points $(P_4, P_5, ..., P_n)$ to each of the three representative points $(P_1, P_2, P_3)$ of the first object $(W_1)$,

(b) determining each value of three angles which are formed with the torch axis line at one of the second work points $(P'_4, P'_5, ..., P'_n)$ and each one of three lines connecting one of the second work points $(P'_4, P'_5, ..., P'_n)$ to each of the three representative points $(P'_1, P'_2, P'_3; P''_1, P''_2, P''_3; P'''_1, P'''_2, P'''_3)$ of the second object $(W_2; W_3)$ to be equal to each value of said three angles corresponding to the first work points $(P_4, P_5, ..., P_n)$,

(c) repeating step (a) and (b) for all other work points of further groups of three work points.

7. The method of claim 1, characterized by:

(a) storing in a microprogram memory (1120) microprograms necessary for arithmetic operations;

(b) buffering said microprogram memory (1120) by using a pipe line register (1130);

(c) controlling an execution sequence of microinstructions stored in said microprogram memory (1120) with a sequence controller (1110);

(d) executing operation instructions specifed by said microprograms from said pipe line register (1130) by using a register and arithmetic logical unit RALU (1150) including a logic and arithmetic operation unit and a programmable register;

(e) applying, through a multiplexer (1140), in response to control instructions from said pipe line register (1130), test conditions of a RALU status (1106) outputted by said register and arithmetic logical unit (1150) to said sequence controller (1110);

(f) using a microprocessor (111) for transferring co-ordinate data of said representative points from a memory of said microprocessor (111) to a first register (1161) and for outputting a macrocommand (1102) to said sequence controller (1110) in response to an arithmetic unit status from said pipe line register (1130);

(g) storing shifted co-ordinate data in a plurality of additional registers (1162—1167);

(h) transferring the shifted co-ordinate data to said RALU (1150); and

(i) applying a jump address generated by said pipe line register (1130) to said sequence controller (1110) when a change of sequence of execution of said microinstructions stored in said microprogram memory (1120) is required.


## Patentansprüche

1. Verfahren zum Steuern der Bewegungen eines ein Werkzeug tragenden Roboters mit einem Handgelenk, bei dem Abweichungen der relativen Lage eines am Roboter angebrachten Werkzeugs und eines zu bearbeitenden Objekts korrigiert werden, wobei das Verfahren beinhaltet:

die Bildung eines Programms von Befehlen, einschließlich Handgelenkbefehlen, das bewirkt, daß das Werkzeug eines Roboters ein erstes derartiges Objekt $(W_1)$ in einer Vielzahl erster Bearbeitungspunkte $(P_4, P_5 ...P_n)$ berührt, und das Speichern dieses Programms;

die Bildung—in Verbindung mit dem gespeicherten Programm—erster Koordinatendaten, die die relative Lage und Ausrichtung des Werkzeugs und des ersten Objekts $(W_1)$ bestimmen;

die Bildung—für eine gleichartige Berührung eines zweiten Objekts $(W_2; W_3)$ mit ähnlicher Form wie die des Ersten $(W_1)$—zweiter Koordinatendaten, die die relative Lage und Ausrichtung des Werkzeugs und des zweiten Objekts $(W_2; W_3)$ bestimmen;

die Durchführung einer Koordinatentransformation in Abhängigkeit von Abweichungen zwischen den ersten und zweiten Koordinatendaten und die Modifizierung der Befehle des gespeicherten Programms an Abhängigkeit von der Transformation derart, daß die Befehle gebildet werden, die erforderlich sind, um das zweite Objekt $(W_2; W_3)$ in zweiten Bearbeitungspunkten $(P'_4, P'_5, ...P'_n)$ zu berühren, die sich in der gleichen Lage relativ zum zweiten Objekt wie die ersten Bearbeitungspunkte $(P_4, P_5, ...P_n)$ relativ zum ersten Objekt $(W_1)$ befinden, und

das Betreiben des Roboters in Abhängigkeit von den Befehlen des derart modifizierten Programms, dadurch gekennzeichnet, daß

die ersten Koordinatendaten die Koordinaten von nur drei representativen Punkten $(P_1, P_2, P_3)$ des ersten Objekts $(W_1)$ aufweisen;

und die zweiten Koordinatendaten die Koordinaten von nur drei repräsentativen Punkten $(P'_1, P'_2, P'_3; P''_1, P''_2, P''_3; P'''_1, P'''_2, P'''_3)$ des zweiten Objekts $(W_2; W_3)$ aufweisen, wobei die Koordinatendaten dieser Punkte so bestimmt sind, daß sie die Bedingung erfüllen, daß die Bearbeitungspunkte und die drei repräsentativen Punkte des zweiten Objekts in einer kongruenten und/oder spiegelbildlichen Relation zu den ersten beiden Bearbeitungspunkten und den drei repräsentativen Punkten $(P_1, P_2, P_3)$ des ersten Objekts stehen, und in der Roboter nach dem Teach-in-Verfahren eingegeben werden, so daß sichergestellt ist, daß Abweichungen in der relativen Lage und Ausrichtung unabhängig davon ausgeglichen werden, ob diese Abweichungen aus einer Verschiebung des Objekts, einem Wechsel des Roboters oder einer Verformung des Werkzeugs resultieren.

2. Verfahren nach Anspruch 1, dadurch gekennzeichnet, daß die ersten Koordinatendaten der drei repräsentativen Punkte $(P_1, P_2, P_3)$ nach dem Teach-in-Verfahren und/oder von außerhalb des Roboters vorgegeben und in einen Speicher des Roboters eingegeben werden.

3. Verfahren nach Anspruch 1, dadurch gekennzeichnet, daß die zweiten Koordinatendaten der drei repräsentativen Punkte $(P'_1—P'_3)$ in einen Speicher des Roboters eingegeben werden.

4. Verfahren nach Anspruch 1, dadurch gekennzeichnet, daß der zweite Bearbeitungsort, der durch die zweiten Bearbeitungspunkte $(P'_4, P'_5, ...P'_n)$ dargestellt wird, einer Längs- und/oder Drehverschiebung des ersten Bearbeitungsortes entspricht.

5. Verfahren nach Anspruch 1, gekennzeichnet durch:

a) das Eingeben von Gelenkachsenwinkeln, die jedem der drei repräsentativen Punkte $(P_1, P_2, P_3)$ des ersten Objekts $(W_1)$ entsprechen, einen Speicher nach einem Teach-in-Verfahren,

b) das Eingeben von Gelenkachsenwinkeln, die jedem der drei repräsentativen Punkte $(P'_1, P'_2, P'_3; P''_1, P''_2, P''_3; P'''_1, P'''_2, P'''_3)$ des zweiten Objekts entsprechen, in einen Speicher nach einem Teach-in-Verfahren,

c) das Berechnen von Kompensationswinkeln aus den erwähnten Gelenkwinkeln für jeden repräsentativen Punkt des ersten $(W_1)$ und des zweiten Objekts $(W_2; W_3)$ und

d) das Addieren der erwähnten Kompensationswinkel zu den Winkeln der Gelenkachsen bei jedem Punkt der ersten Bearbeitungspunkte $(P_4, P_5, ...P_n)$ zur Bildung kompensierter Winkel der Gelenkachsen für jede Punkt der zweiten Bearbeitungspunkte $(P'_4, P'_5, ...P'_n)$.

6. Verfahren nach Anspruch 1, dadurch gekennzeichnet, daß am Handgelenk des Roboters ein Schweißbrenner als Werkzeug angebracht ist und das Verfahren ferner die folgenden Schritte aufweist:

a) das Berechnen dreier Winkel, die von der Schweißbrennerachsenlinie in einem der ersten Bearbeitungspunkte $(P_4, P_5, ...P_n)$ und jeder von drei Linien eingeschlossen werden, die einen der ersten Bearbeitungspunkte $(P_4, P_5, ...P_n)$ mit jedem der drei repräsentative Punkte $(P_1, P_2, P_3)$ des ersten Objekts $(W_1)$ verbinden,

b) das Bestimmen jedes Wertes von drei Winkeln, die von der Schweißbrennerachsenlinie in einem der zweiten Bearbeitungspunkte $(P'_4, P'_5, ...P'_n)$ und jeder von drei Linien eingeschlossen werden, die einen der zweiten Bearbeitungspunkte $(P'_4, P'_5, ... P'_n)$ mit jedem der drei repräsentativen Punkte $(P'_1, P'_2, P'_3; P''_1, P''_2, P''_3; P'''_1, P'''_2, P'''_3)$ des zweiten Objekts $(W_2; W_3)$ verbinden, derart, daß sie gleich jedem Wert der erwähnten drei Winkel sind, die den ersten Bearbeitungspunkten $(P_4, P_5, ...P_n)$ entsprechen, und

c) das Wiederholen der Schritte a) und b) für alle anderen Bearbeitungspunkte weiterer Gruppen von drei Bearbeitungspunkten.

7. Verfahren nach Anspruch 1, gekennzeichnet durch:

a) das Speichern von zur Ausführung von Rechenoperationen erforderlichen Mikroprogrammen in einem Mikroprogrammspeicher (1120);

b) das Puffern des Mikroprogrammspeichers (1120) durch Verwendung eines Pipe-line-Registers (1130);

c) das Steuern einer Ausführungsfolge von Mikrobefehlen, die in dem Mikroprogrammspeicher (1120) gespeichert sind, durch ein Ablaufsteuerwerk (1110);

d) das Ausführen von Operationsbefehlen, die durch das Mikroprogramm aus dem Pipe-line-Register (1130) vorgegeben werden, durch Verwendung einer Registrier- und Rechenlogikeinheit RALU (1150), die eine Logik- und Rechenoperationseinheit und ein programmierbares Register enthält;

e) das Eingeben—über einen Multiplexer (1140), in Abhängigkeit von Steuerbefehlen aus dem Pipe-line-Register (1130)—von Testbedingungen eines RALU-Status (1106), der durch die Registrier- und Rechenlogikeinheit (1150) ausgegeben wird, in das Ablaufsteuerwerk (1110);

f) der Verwendung eines Mikroprozessors (111) zum Übertragen von Koordinatendaten der repräsentativen Punkte aus einem Speicher des Mikroprozessors (111) in ein erstes Register (1161) und zum Ausgeben eines Makrobefehls (1102) an das Ablaufsteuerwerk (1110) in Abhängigkeit von einem Recheneinheit-Status aus dem Pipe-line-Register (1130);

g) das Speichern verschobener Koordinatendaten in mehreren zusätzlichen Registern (1162—1167);

h) das Übertragen der verschobenen Koordinatendaten in die RALU (1150) und

i) das Eingeben einer Sprungadresse, die durch das Pipe-line-Register (1130) erzeugt wurde, in das Abflaufsteuerwerk (1110), wenn eine Änderung der Reibenfolge der Ausführung der in dem Mikroprogrammspeicher (1120) gespeicherten Mikrobefehle erforderlich ist.

**Revendications**

1. Un procédé de commande des déplacements d'un robot porte-outil du type possédant un tourillon,

## EP 0 062 244 B1

comportant des agencements pour corriger des écarts des dispositions relatives d'un outil attaché au robot et d'un objet à usiner, le procédé comprenant les étapes de:

fournir un programme de commande, y compris des commandes de tourillon, susceptible d'amener l'outil d'un robot à venir en contact avec un premier tel objet $(U_1)$ en plusieurs points d'usinage $(P_4, P_5, ...P_n)$ et mémoriser ce programme;

fournir, en association avec le programme mémorisé, des premières données de coordonnées définissant la position et l'orientation relatives de l'outil et du premier objet $(U_1)$;

fournir, dans le but de venir de même en contact avec un deuxième objet $(U_2; U_3)$ de configuration similaire au premier $(U_1)$, des deuxièmes données de coordonnées définissant la position et l'orientation relative de l'outil et du deuxième objet $(U_2; U_3)$;

réaliser une transformation de coordonnées en fonction des écarts entre les premières et les deuxièmes données de coordonnées et modifier les commandes du programme mémorisé en fonction de la transformation, de manière à fournir les commandes nécessaires pour venir en contact avec le deuxième objet $(U_2; U_3)$ en des deuxièmes points d'usainge $P'_4, P'_5, ...P'_n)$ qui sont dans la même position, par rapport au deuxième objet, que les premiers points d'usinage $(P_4, P_5, ...P_n)$ par rapport au premier objet $(U_1)$,

mettre en oeuvre le robot sous la commande du programme ainsi modifié, caractérisé en ce que les premières données de coordonnées ne comprennent les coordonnées que de trois points représentatifs $(P_1, P_2, P_3)$ du premier objet $(U_1)$;

et les deuxièmes données de coordonnées ne comprennent les coordonnées que de trois points représentatifs $(P_1', P_2', P_3', P_1'', P_2'', P_3''; P_1''', P_2''', P_3''')$ du deuxième objet $(U_2; U_3)$, les données de coordonnées desdits points étant déterminées de façon à satisfaire la condition que les points d'usinage et les trois points représentatifs du deuxième objet soient dans une relation de congruence et/ou d'image en miroir avec les premiers points d'usinage et les trois points représentatifs $(P_1, P_2, P_3)$ du premier objet et soient enseignés au robot, en assurant ainsi que les écarts de position et d'orientation relative sont compensés, que ces écarts résultent du déplacement de l'objet, du remplacement du robot ou d'une déformation de l'outil.

2. Le procédé selon la revendication 1, caractérisé en ce que les premières données de coordonnées des trois points représentatifs $(P_1, P_2, P_3)$ sont données par enseignement et/ou données de l'extérieur du robot et introduites dans une mémoire du robot.

3. Le procédé selon la revendication 1, caractérisé en ce que les deuxièmes données de coordonnées des trois points représentatifs $(P_1'$ à $P_3')$ sont introduites dans une mémoire du robot.

4. Le procédé selon la revendication 1, caractérisé en ce que le second lieu géométrique d'usinage représenté par les deuxièmes points d'usinage $(P_4', P_5', ..., P_n')$ correspond à un déplacement longitudinal et/ou en rotation du premier lieu géométrique d'usinage.

5. Le procédé selon la revendication 1, caractérisé par:

(a) l'introduction d'angle d'axes de tourillons, angles qui correspondent à chacun des trois points représentatifs $(P_1, P_2, P_3)$ du premier objet $(U_1)$ dans une mémoire par un procédé d'enseignement,

(b) l'introduction d'angles d'axes de tourillons, angles qui correspondent à chacun des trois points représentatifs $(P_1', P_2', P_3'; P_1'', P_2'', P_3''; P_1''', P_2''', P_3''')$ du deuxième objet, dans une mémoire par un procédé d'enseignement,

(c) le calcul de compensation d'angles à partir desdits angles de tourillon à chaque point point représentatif du premier $(U_1)$ et des deuxièmes $(U_2; U_3)$ objets,

(d) l'addition desdits angles de compensation aux angles des axes de tourillon à chaque point desdits premiers points d'usinage $(P_4, P_5, ...,P_n)$ pour obtenir des angles compensés des axes de tourillon à chaque point desdits deuxièmes points d'usinage $(P_4', P_5', ...,P_n')$.

6. Le procédé selon la revendication 1, caractérisé en ce que le robot porte au chalumeau comme outil attaché au tourillon, le procédé comprenant de plus les étapes de:

(a) calculer trois angles qui sont formés par la ligne d'axe du chalumeau à l'un des premiers points d'usinage $(P_4, P_5, ...,P_n)$ et chacune de trois lignes reliant l'un des premiers points d'usinage $(P_4, P_5, ...,P_n)$ à chacun des trois points représentatifs $(P_1, P_2, P_3)$ du premier objet $U_1)$,

(b) déterminer chaque valeur de trois angles qui sont formés avec la ligne d'axe du chalumeau à l'un des deuxièmes points d'usinage $(P_4', P_5', ...,P_n')$ et chacune des trois lignes reliant l'un des deuxièmes points d'usinage $(P'_4, P'_5, ...,P'_n)$ à chacun des trois points représentatifs $(P_1', P_2', P_3'; P_1'', P_2'', P_3''; P_1''', P_2''', P_3''')$ du deuxième objet $(U_2; U_3)$ pour qu'elles soient égales à chaque valeur desdits trois angles correspondants des premiers points d'usinage $(P_4, P_5, ...,P_n)$,

(c) répéter les étapes (a) et (b) pour tout les autres points d'usinage de groupes ultérieurs de trois points d'usinage.

7. Le procédé selon la revendication 1, caractérisé par les étapes de:

(a) mémoriser dans une mémoire de microprogramme (1120) des microprogrammes nécessaires aux opérations arithmétiques;

(b) tamponner ladite mémoire de microprogramme (1120) en utilisant un registre monté en ligne (1130);

(c) commander une séquence d'exécution de micro-instructions mémorisées dans ladite mémoire de microprogramme (1120) avec un dispositif de commande à séquence (1110);

(d) exécuter les instructions d'opérations spécifiées par lesdits microprogrammes à partir dudit registre (1130) monté en ligne en utilisant une unité à registre et à logique arithmétique URLA (1150) comprenant une unité d'opération logique et arithmétique et un registre programmable;

(e) appliquer, au moyen d'un multiplexeur (1140), en réponse aux instructions de commande provenant dudit registre monté en ligne (1130), des conditions d'essai d'un status d'URLA (1106) émises par ladite unité à registre et à logique arithmétique (1150) vers ledit dispositif à commande en séquence (1110);

(f) utiliser un microprocesseur (111) pour transférer les données de coordonnées desdits points représentatifs d'une mémoire dudit microprocesseur (111) à un premier registre (1161) et pour envoyer une macrocommande (1102) audit dispositif de commande à séquence (1110) en réponse à un statut d'unité arithmétique provenant dudit registre (1130) monté en ligne;

(g) mémoriser les données décalées de coordonnées dans plusieurs registres additionnels (1162 à 1167);

(h) transférer les données décalées de coordonnées à ladite URLA (1150); et

(i) appliquer une adresse de saut engendrée par ledit registre monté en ligne (1130) audit dispositif de commande en séquence (1110) lorsqu'il faut une modification de séquence d'exécution desdites microinstructions mémorisées dans ladite mémoire de microprogramme (1120).

# FIG. I

# FIG. 2

EP 0 062 244 B1

## FIG. 3

## FIG. 4

NO. 1 NO. 2 NO. 3

2

# FIG. 5

# FIG. 6

# FIG. 7

# FIG. 8

FIG. 9

FIG. 10a

P(CONTROL POINT)

# FIG. 10b

# FIG. 10c

# FIG. 10d

# FIG. 10e

# F I G. 11

# F I G. 12

MICROPROCESSOR ‐111

COMMAND CIRCUIT ‐120

‐Ψ-AXIS COMMAND PULSE   ‐121   Ψ-AXIS SERVO CIRCUIT

DIFFERENCE COUNTER — 1211
D/A — 1212
1213
M₁ — Ψ-AXIS MOTOR
1214
TG — TACHOMETER GENERATOR
1215
PG — PULSE GENERATOR
1216

‐θ-AXIS COMMAND PULSE   ‐122   θ-AXIS SERVO CIRCUIT

DIFFERENCE COUNTER — 1221
D/A — 1222
1223
M₂ — θ-AXIS MOTOR
1224
TG — TACHOMETER GENERATOR
1225
PG — PULSE GENERATOR
1226

‐φ-AXIS COMMAND PULSE   ‐123   φ-AXIS SERVO CIRCUIT

DIFFERENCE COUNTER — 1231
D/A — 1232
1233
M₃ — φ-AXIS MOTOR
1234
TG — TACHOMETER GENERATOR
1235
PG — PULSE GENERATOR
1236

‐γ-AXIS COMMAND PULSE   ‐124   γ-AXIS SERVO CIRCUIT

DIFFERENCE COUNTER — 1241
D/A — 1242
1243
M₄ — γ-AXIS MOTOR
1244
TG — TACHOMETER GENERATOR
1245
PG — PULSE GENERATOR
1246

‐τ-AXIS COMMAND PULSE   ‐125   τ-AXIS SERVO CIRCUIT

DIFFERENCE COUNTER — 1251
D/A — 1252
1253
M₅ — τ-AXIS MOTOR
1254
TG — TACHOMETER GENERATOR
1255
PG — PULSE GENERATOR
1256